# EUROPEAN PATENT APPLICATION

(11) **EP 1 873 200 A1**
(43) Date of publication of application: **02.01.2008**
(21) Application number: 06076324.0
(22) Date of filing: 29.06.2006
(51) Int. Cl.: C08K 5/435, C08K 5/00

(54) **An improved process for making an external plasticization of aliphatic polyamides and plasticizers useful for said plasticization**

(71) Applicant: Arkema France, 92800 Puteaux (FR)
(72) Inventor: Rogalskiy, Sergey, 02152 Kyiv (UA); Korzhenko, Alexander, 27800 Saint Victor d'Epine (FR); Montanari, Thibaut, 27300 Menneval (FR)
(74) Representative: Delprat, Corinne

(57) **Abstract**

The subject-matter of the present invention is a process for making plasticization of an aliphatic polyamide with an external plasticizer of formula (II):

R¹- [F1-A]ₘ-F'1-R² (II)

wherein:
- R¹ and R²; identical or different, each represent a terminal group;
- m is an integer from 1;
- F1 and F'1, identical or different, each represent a divalent functional group having two chain links, the F groups being identical or different when m is 2 or more ;

A represents a divalent aliphatic, aromatic, aliphatic-aromatic or aromatic-aliphatic arm, the A arms being identical or different when m is 2 or more.

## Description

The present invention relates to an improved process for making an external plasticization of aliphatic polyamides, and to plasticizing agents useful for carrying out said process.

### Technical problem

Rilsan® polyamide resins are widely used in technical branches due to their unique combination of properties like high thermal stability, excellent impact resistance at low temperatures, crush and abrasion resistance, good creep resistance and many other advantages. This allows the use of Rilsan polyamides for the production of items such as electrical cables, automotive, hydraulic, and pneumatic hoses.

Recently, polyamide-11 (PA-11) has been used as a fluid barrier layer in the offshore high pressure flexible pipelines transporting raw natural gas, condensates, recovered water and other oilfield fluids (James F. Mason, Elf Atochem North America, Inc. Technical Polymers Department). Liners made from PA 11 offer protection from high temperature, corrosive upstream oil and gas.

In most cases of polyamide applications cited above, the introduction of a plasticizer into the polymer is required to reduce its stiffness. Plasticizers interrupt some hydrogen bonds between carbonyl and amine groups of neighboring polyamide macromolecules in the amorphous phase, resulting in a lowering of tensile and flexural modulus. On the other hand, polyamides cannot be processed by molding methods without the application of plasticizers. The aromatic sulfonamides, especially toluenesulfonic acid alkylamides, benzenesulfonic acid alkylamides, and alkyl hydroxybenzoates are preferably used as an effective plasticizing agent for polyamide (US 5,789,529). Long-chain diols may also be used (Design Guide to a Versatile Engineering Plastic, Rilsan Corp., France, 1984).

### Prior art

The most commonly used plasticizer for Rilsan polyamides is N-butyl benzenesulfonamide (BBSA), which offers good plasticization effect due to a strong hydrogen bond between the sulfonamide proton and the amide's carbonyl lone pairs (Ph. De Groote, P. G. Rouxhet, J. Devaux, and P. Godard. Applied Spectroscopy, July 2001 (Abstracts), Vol. 55 (7)). BBSA (trade mark Uniplex 214) is a liquid sulfonamide plasticizer for a number of resins, such as polyacetals, polycarbonates, polysulfones and polyamides, especially PA 11 and PA 12 (JP 56-161426). The addition of this plasticizer makes the processing from molds easier, and leads to a better shape stability due to reduced water absorption. It is easy to introduce BBSA into polyamides (DE 4,301,809 A1), and it has high thermal stability (EP 0,007,623 A1). Moreover, antistatic properties may be added to polyamide when BBSA is introduced in certain quantities (EP 264,269).

However, it has also numerous drawbacks, such as volatility, sweating from Rilsan matrix when heated (above 80°C) or extraction with oil fluids. It should be noted that sulfonamide plasticizers are not subject to degradation by heat (US 4,996,360). BBSA is often added into the initial reaction mixture during the Rilsan synthesis, but some degradation of the plasticizer takes place during the process of polycondensation. This gives a negative impact on mechanical properties of the polyamides. Although BBSA greatly enhances the low temperature flexibility of polyamides, the plasticizer has a freezing point of approximately -20°C. At the freezing point, BBSA interacts only very weakly with PA-11, minimizing the plasticization effect (James F. Mason. Elf. Atochem North America, Inc. Technical Polymers Department). As a result, PA-11 or PA-12 resin compositions plasticized with BBSA are considerably inferior to polyamide resins not containing any plasticizer (US 5,789,529) for low-temperature impact resistance.

The best known methods to improve such drawbacks are the use of polyamide oligomers, modified polyolefins or of another plasticizers in the mixture with BBSA (or separately), as well as chemical modification of commonly used plasticizers.

It is known that oligoamides are often used to make the polyamide processing by molding methods easier (Design Guide to a Versatile Engineering Plastic, Rilsan Corp., France, 1984). But in many cases the melt viscosity remains too high, especially for the polymers with high molecular weight.

p-Hydroxybenzoic acid alkyl esters are known to be used as plasticizers for polyamides having excellent high-temperature volatilization resistance and low-temperature impact resistance (US 6,348,563). An alkyl p-hydroxybenzoate polycondensed with formaldehyde was used as a plasticizer for polyamides ; the polycondensate provided an improved plasticizing effect and improved moisture resistance (JP 57-102916 A2).

N-(2-hydroxyethyl) benzenesulphonamide, N-(3-hydroxypropyl) benzenesulphonamide and N-(2-acetoxyethyl) benzenesulphonamide were found to be equally effective plasticizers for different polyamides (US 6, 624, 218 B2).

To provide the plasticizer which gives a polyamide resin composition having excellent flexibility, a diamine such as 2,2-bis [4-(4-aminophenoxy)phenyl] propane was condensed with an acid chloride such as benzoyl chloride (JP 58-040346 A2).

The polycondensate of an aromatic sulfonamide with an aldehyde or a dicarboxylic acid was used to obtain a thermoplastic composition of polyamide for the direct adherent coating of metallic substrates (US 5,387,653).

It has been proposed to combine polyamides with other hydrocarbon polymers for polyamide (US patents 3,388,186 ; 3,632,790 ; 3,822,227), or with rubber (a homopolymer of 1,3-butadiene, copolymer of 1,3-butadiene or isoprene or mixtures thereof) (US 4,173,556) to obtain less rigid and more flexible PA. It was found that such effects may be achieved at room temperature while a deterioration of these properties was observed at low temperature (US 3,388,186).

The widely used approach is the blending of polyamides with polyolefines containing polar carboxylic side groups for better compatibility. Thermoplastic blends of high-amine - end and acid-containing olefin polymers were obtained in US 3,676,400. A polymeric composition having improved zinc chloride resistance was prepared from sulphonamide plasticized Nylon 6-12 and an olefin polymer having sites which adhere to the Nylon 6-12 resin (adduct of maleic anhydride or fumaric acid and ethylene polymer) (US 4,251,424).

The complex mixture of polyamide, modified polyolefin resin and two types of plasticizers were also used: one selected from the group consisting of phthalic esters, fatty acids esters, polyhydric alcohol esters, phosphoric esters, trimellitic esters, and epoxy plasticizers, and the second plasticizer selected from the group consisting of benzenesulfonic acid alkylamides, toluenesulfonic acid alkylamides, and alkyl hydroxybenzoates. A good flexibility as well as a good low-temperature impact resistance of molded polyamide articles (EP 748,847 A2) were found. Such polyamide resin compositions were found to be useful as tubular mouldings (US 5,789,529).

To provide a plasticizer having excellent compatibility with polyamide resins and having high softness-imparting effect, amide ester was obtained from an acid selected from the group consisting of phthalic acid, trimellitic acid, pyromellitic acid and their anhydrides, and from a dialkylamine having alkyl groups with 2-8 carbon atoms and an aliphatic alcohol having alkyl groups with 6-20 carbon atoms or an addition product of the alcohol and a alkylene oxide having 2-4 carbon atoms or composed of an amide having a molecular weight equal to or greater than 250 and derived from an acid selected from the group consisting of benzoic acid, phthalic acid, trimellitic acid, pyromellitic acid and their anhydrides and from a dialkylamine having alkyl groups with 2-8 atom carbons. A preparation of a polyamide composition with such plasticizers allows to provide a molded article free from stickiness, keeping the flexibility even after the use over a long period of time at a high temperature and exhibiting excellent low-temperature impact resistance (JP 7316343 A2).

Impact and heat resistant thermoplastic flexible resins were prepared from 40-60 % wt. of a polyamide (preferably Nylon 6 or Nylon 66), 10-20 % wt. of a propylene polymer, 50-20 % wt. of a modified ethylene-α-olefin copolymer produced by grafting 0.01-5 % wt. of a grafting monomer selected from unsaturated carboxylic acids and their derivatives (preferably maleic anhydride, etc.) to 100% wt. of an ethylene - α-olefin copolymer and 2-20% wt. of a plasticizer for polyamides (preferably p-oxybenzoic acid ester, etc.). (JP 6228436 A2). Such polyamide composites were found to be useful for vehicle parts.

A salt resistant composition comprising a polyamide, a water insoluble plasticizer (lauryl lactam and sulfonamide type plasticizers such as n-ethyl; o,p-toluenesulfonamide ; o,p-toluene sulfonamide, and toluene sulfonamide formaldehyde resin) and a copolymer of an α-olefin and an unsaturated carboxylic acid and derivatives thereof. The plasticizer has been found to enable the polyamide composition to maintain its flexibility upon exposure to a variety of salts (US 4,801,633).

A preparation of polyamide monofilaments with improved flexibility has been reported in JP 62170515 by a melt spinning of a composition containing 90 parts Nylon 6, 5 parts caprolactam, 5 parts BBSA, and 0.3 parts ethylene-bis (stearamide).

Blown film extrusion of PA-6 containing BBSA in combination with lubricant - magnesium stearate has been reported in JP 60049085.

The oil-resistant composition with better moldability was obtained by molding of the mixture of Nylon-12 (60 wt.p.), BBSA (10 p.), and maleic acid-modified copolymer (30 p.) (JP 60173047).

Resin compositions having good mechanical strength and softness were prepared from Nylon 6, ethylene-glycidyl methacrylate-vinyl acetate copolymer, ethylene-propylene rubber or Evaflex P 1407 and BBSA (JP 54 029360).

Another approach concerns the use of PA-12 plasticized with BBSA in combination with polyurethane having rubber elasticity and lower flexural modulus than the polyamide (JP 49 034947).

The combined blending of polyamide and butyl or bromobutyl rubbers is carried out in a high shear environment (J. D. (Jack) Van Dyke et. al. J. Appl. Polym. Sci., 2003, V. 89, Nº 4, p. 980 - 991). The presence of small quantities of block or graft polymers in the system was found. It was explained by a chemical reaction between polyamide and the butyl rubber components during processing.

### The invention

The main object of the invention is a new type of external plasticization of polyamides that does not show any sweating of the plasticizer. The plasticizers are also of a higher thermal stability than conventional plasticizers usually used in polyamides. A new approach is proposed which is the external plasticization of polyamides (alternative to BBSA) with the use of bifunctional sulfamide type plasticizers or polyfunctional plasticizers containing notably sulfamide, amide and ester groups connected notably by an aliphatic or araliphatic part and located quite at the opposite of polyamide polar groups. The idea is that such a molecule interacting with a few neighbouring amide sequences will keep a better position stability while giving a good plasticizating effect.

The subject-matter of the present invention is a process for making plasticization of an aliphatic polyamide having the chain formation of the formula (I):

-[F-R-F'-R']ₙ- (I)

wherein:
- F and F' each independently represent a functional group 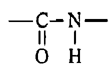 or 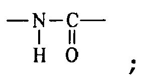
- R and R', identical or different, each independently represent a divalent aliphatic radical ; and
- n represents the number of -[F-R-F'-R']- units of said polyamide,
characterised in that at least one external plasticizer is added to said polyamide, said at least one external plasticizer being selected among compounds having the formula (II):

R¹-[Fl-A]ₘ-F'1-R² (II)

wherein :
- R¹ and R² ; identical or different, each represent a terminal group;
- m is an integer from 1;
- F1 and F'1, identical or different, each represent a divalent functional group having two chain links, the F groups being identical or different when m is 2 or more ;
- A represents a divalent aliphatic, aromatic, aliphatic-aromatic or aromatic-aliphatic arm, the A arms being identical or different when m is 2 or more ;
the nature of the functional groups F1 and F'1 and the length of the arms (f) being selected so that the functions F1 and F'1' are under the plasticization conditions able to interact and/or react respectively with two neighbouring functions 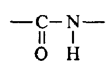 or 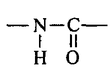 of the polyamide of formula (I) when m is 1 or with m + 1 neighbouring functions 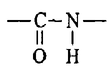 or 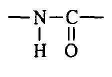 of the polyamide of formula (I) when m is different from 1.

The functions F1 and F'1 can be selected among the functions 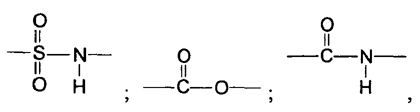 each of them being intended to interact and/or react with a 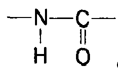 group of a polyamide.

Preferably, m can be 1 or 2.

The polyamides to be plasticized are preferably selected among long chain polyamides such as:
- PA-X, said polyamide being prepared from an aliphatic amino acid having notably from 6 to 18 carbon atoms, and preferably 6, 11 and 12 carbon atoms, X denoting the residues of said aliphatic amino acid ;
- PA-X,Y, said polyamide being prepared from an aliphatic diamine having notably from 6 to 20, advantageously 6 to 18, preferably 6 to 12, carbon atoms and an aliphatic dicarboxylic acid having notably from 4 to 24 carbon atoms, X denoting the residues of said aliphatic diamine and Y denoting the residues of said aliphatic dicarboxylic acid ;
- PA-X,Y/Z, said polyamide being prepared from an aliphatic diamine having notably from 6 to 20, advantageously 6 to 18, preferably 6 to 12, carbon atoms, an aliphatic dicarboxylic acid having notably from 4 to 24, advantageously 6 to 18, preferably 6 to 18, preferably 6 to 14, carbon atoms,and a lactam having notably from 6 to 14 carbon atoms; X denoting the residues of said aliphatic diamine, Y denoting the residues of said aliphatic dicarboxylic acid and Z denoting the residues of said lactam. As examples of lactams, mention may be made of lactam 6 or 12.

In particular, the polyamides to be plasticized are selected among PA-6, PA-11, PA-12, PA-6.6, PA-6.10 (hexamethylenediamine and sebacic acid units), PA-6.12 (hexamethylenediamine and dodecanedioic acid units), PA-6.14 (hexamethylenediamine and C14 diacid units), PA-6.18 (hexamethylenediamine and C18 diacid units), PA-10.10 (1,10-decane diamine and sebacic acid units); PA-6.6/6, PA-6.10/6, PA-6,10/12.

Preferred polyamides are PA-6, PA-11, PA-12 and PA-6.6.

More particularly, the plasticizer can be selected among the following compounds:
**p-alkylbenzenesulfonamides of formula (III):**

   R₃-C₆H₄SO₂NHR₄ (III) (III)

   with R₃ = C₁₂H₂₅, C₁₆H₃₃;
   R₄= H,CH₃,C₁₆H₃₃.
   Preferred plasticizers are the following:
   C₁₂H₂₅-C₆H₄-SO₂NH₂
   or C₁₆H₃₃-C₆H₄-SO₂NH₂
   C₁₂H₂₅-C₆H₄-SO₂NH₂ is a good plasticizer for PA-11, PA-12, PA-6 and PA-6.6.
**guanidine-based ionic liquids of formula (IV):** 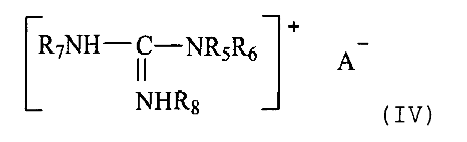 with
   R₅ = H, C₄H₉
   R₆ = C₄H₉
   R₇ = H, C₄H₉, C₁₆H₃₃
   R₈ = H, C₈H₁₇, C₁₆H₃₃
   A⁻ = R₉SO₃⁻ , R₁₀COO⁻
   R₉ = C₈H₁₇, C₁₆H₃₃, R_{9'}C₆H₄
   R_{9'} = H, CH₃, C₁₆H₃₃
   R₁₀ = C₈H₁₇, C₁₆H₃₃, C₆H₅

The following compounds are good plasticizers of PA-11, PA-12, PA-6 and PA-6.6:

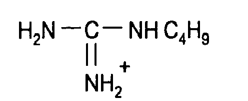

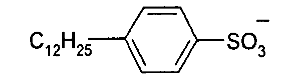

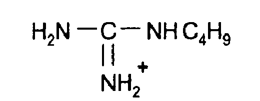

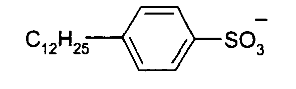

The plasticizers can also be selected from :
**(1) the sulfamide type plasticizers of the formula (V) :** 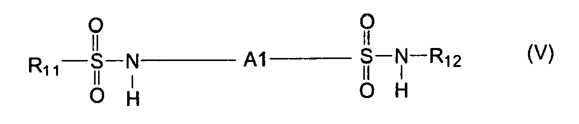 wherein:
   - A1 = -(CH₂)ₙ-, n being 5, 10, the polyamide to be plasticized being respectively PA-6, PA-11 and PA-12;
   - (CH₂)ₚCONH-C₆H₄- ; -(CH₂)ₚNHCO-C₆H₄- ; -(CH₂)ₚCOO-C₆H₄- ;-(CH₂)ₚCOOCH₂-C₆H₄- ; p being 1 when the polyamide to be plasticized is PA-6 and p being 5 when the polyamide to be plasticized is PA-11 or PA-12 ;
   - R₁₁ = -Alk, -C₆H₅, -C₆H₄Alk,
   - R₁₂ = -Alk ;
   Alk representing an alkyl radical having 1 to 16 carbon atoms.
   The product of formula 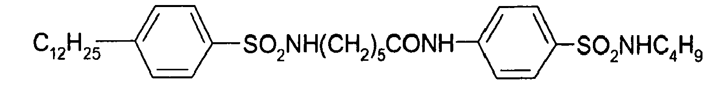 is a good plasticizer of PA-11.
**(2) the combined sulfamide-ester/amide type plasticizers of formula (VI) :** 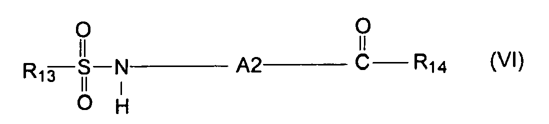 wherein :
   - A2 = -(CH₂)_{q}- , q = 5, 10, the polyamide to be plasticized being respectively PA-6 or PA-11;
   - R₁₃ = -Alk, -C₆H₅, -C₆H₄Alk,
   - R₁₄ = -NHAlk or -OAlk;
      Alk representing an alkyl radical having 1 to 16 carbon atoms.
      The product of formula 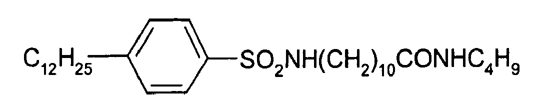 is a good plasticizer of PA-11.
**(3) the trifunctional sulfamide-amide-ester plasticizers of the formula (VII) :** 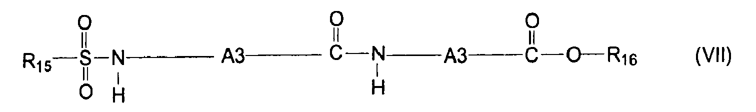 wherein :
   - A3 = -(CH₂)ₙ-, n = 5, 10, the polyamide to be plasticized being respectively PA 6 or PA 11;
   - R₁₅ = -Alk, -C₆H₅, -C₆H₄Alk;
   - R₁₆ = -Alk ;
   Alk representing an alkyl radical having 1 to 16 carbon atoms.
   The product of formula 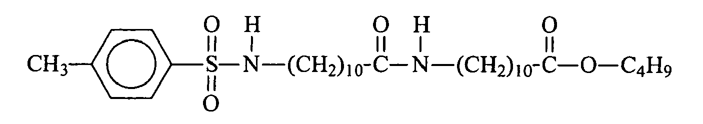 is a good plasticizer for PA-11.

The following examples are offered by way of illustration.

### EXAMPLE 1 : Synthesis of N¹-(4-butylsulfamoylphenyl)-6-(phenylsulfonamido)hexanamide

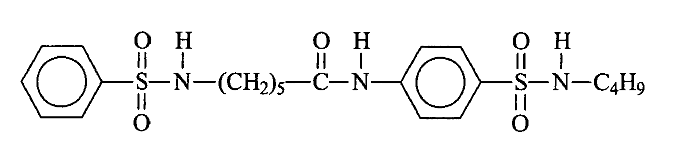

### Preparation of the reactants

### A : Preparation of phenylsulfonamidohexanoic acid

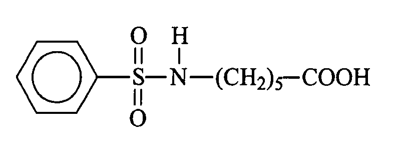

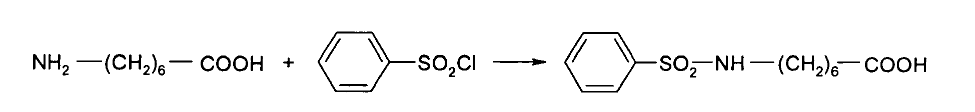

25.5 g (0.2 mol) of aminohexanoic acid were dissolved in 100 ml of 2 M NaOH water solution. A solution of benzenesulfonyl chloride (25.4 ml - 0.2 mol) in 100 ml of acetone and 50 ml of 4 M NaOH water solution were added simultaneously while intensively stirred. The exotermic reaction was allowed to proceed 1 hour. Acetone was removed by vacuum distillation and water solution was acidified by 17 ml of concentrated hydrochloric acid and cooled. The product was filtered, recrystallized from water - ethanol mixture and thoroughly dried under vacuum.

### B : Preparation of 4-amino-N-butylbenzenesulfonamide

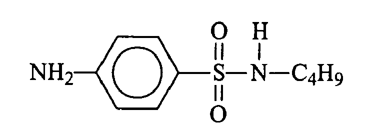

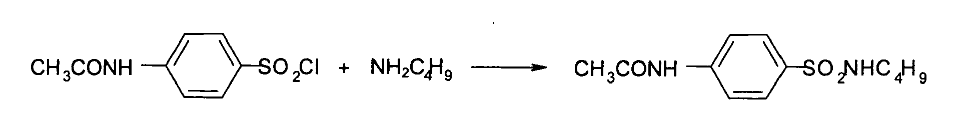

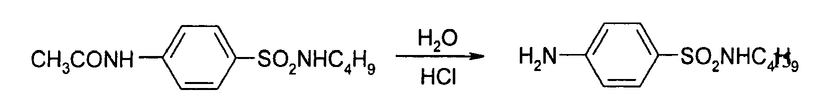

The 4-acetamidobenzenesulfonyl chloride was obtained according to Stewart, J. Chem. Soc. 121, 2558 (1922).

10 g (0.042 mol) of 4-acetamidobenzenesulfonyl chloride were stirred in 50 ml of water: n-butylamine mixture (2:1 vol.) at 70°C during 1 hour. The product was precipitated after excess butylamine was distilled. White powder was filtered, washed by water and expressed.

10 g of moist powder of 4-acetamido-N-butylbenzenesulfonamide were boiled 20 min in a mixture isopropanol(20 ml) : concentrated hydrochloric acid (10 ml). The precipitated product (hydrochloric salt of 4-amino-N- butylbenzenesulfonamide) was filtered, washed by water and converted into amine by solution in water - ethanol mixture (1:1 vol.) followed by concentrated ammonia addition (to alkalescent pH). The 4-amino-N-butylbenzenesulfonamide was precipitated when cooled to 10°C, filtered, washed by water and recrystallized from water : ethanol mixture.

### Preparation of the title compound :

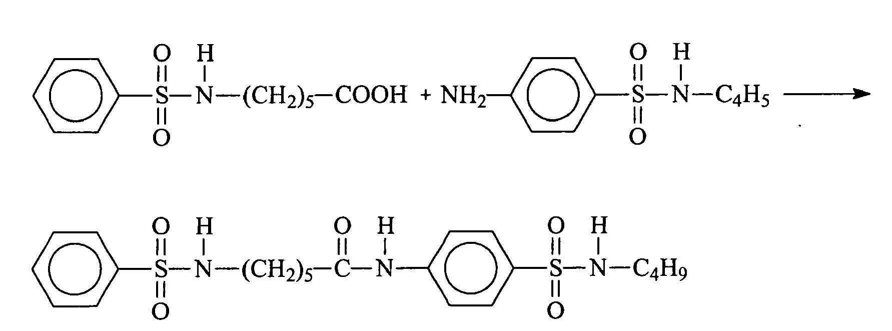

A solution of 27.1 g phenyl-sulfonamidohexanoic acid (0.1 mol) and 22.8 g (0.1 mol) of 4-amino-N-butylbenzenesulfonamide in 120 ml of dried pyridine cooled to 10°C. 8.03 ml (0.11 mol) of thionyl chloride were added when stirred. The reaction was allowed to proceed 1 hour at 10°C and 2 hours at room temperature. The excess of pyridine was distilled at reduced pressure. ~ 200 ml of diluted hydrochloric acid were added, solid product was filtered and washed with water, alkaline water solution and water in turn and then purified by recrystallization from ethanol.

### EXAMPLE 2 : Synthesis of N¹-(4-butylsulfamoylphenyl)-6-(dodecylbenzenesulfonamido)hexanamide

C₁₂H₂₅C₆H₄SO₂NH (CH₂)₅CONHC₆H₄SO₂NHC₄H₉

### A: Synthesis of dodecylbenzenesulfonyl chloride C₁₂H₂₅C₆H₄SO₂Cl

35 g (0.1 mol) of sodium dodecylbenzenesulfonate were stirred with 50 ml of chlorosulfonic acid at room temperature during 4 hours. Reactionary mixture was poured on crushed ice and cream - coloured oil was obtained. It was washed with water few times and isolated with the help of separating funnel followed by drying in vacuum (0.1 mbar) at 70°C.

### B: Synthesis of dodecylbenzenesulfonamidohexanoic acid C₁₂H₂₅C₆H₄SO₂NH (CH₂)₅COOH

25.5 g (0.2 mol) of 6-aminohexanoic acid were dissolved in 100 ml of 8 g (0.2 mol) of sodium hydroxide water solution. 70 g (0.2 mol) of dodecylbenzenesulfonyl chloride and 80 ml of 10% aqueous sodium hydroxide were simultaneously added with stirring to the solution. After stirring for 3 hours the solution was acidified with hydrochloric acid and brown oil product was obtained. It was washed with water and isolated with the help of a separating fuel followed by drying in vacuum.

### Preparation of title compound:

43.9 g dodecylbenzenesulfonamidohexanoic acid (0.1 mol) and 22.8 g (0.1 mol) of 4-amino-N-butylbenzenesulfonamide, obtained in Example 1 were dissolved in 200 ml of dried pyridine. 8.03 ml (0.11 mol) of thionyl chloride were added when stirred. The reaction was allowed to proceed 4 hours at room temperature. Further procedures were the same as in Example 1.

### EXAMPLE3: Synthesis of N¹-butyl-11-phenylsulfonamidoundecanamide

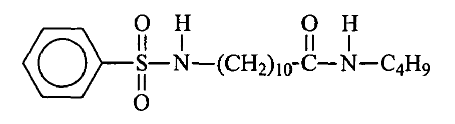

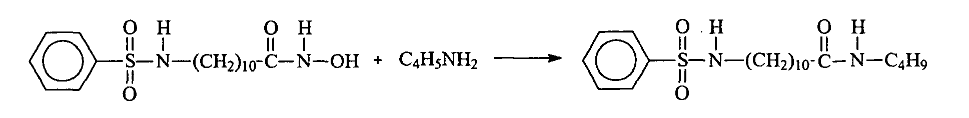

### A: Preparation of 11-phenylsulfonamidoundecanoic acid C₆H₅SO₂NH (CH₂)₁₀COOH

40.2 g (0.2 mol) of 11-aminoundecanoic acid were dissolved in 300 ml of water solution containing 11.2 g (0.2 mol) of potassium hydroxide. 25.4 ml (0.2 mol) of benzenesulfonylchloride and 80 ml of 10% aqueous sodium hydroxide were simultaneously added with stirring to the solution. After stirring for 3 hours the solution was acidified with hydrochloric acid. White powder was filtered, washed with water and recrystallized from ethanol followed by drying at 80°C.

### Synthesis of title compound:

The N¹-butyl-11-phenylsulfonamidoundecanamide was obtained by stirring a solution of 34.1g (0.1 mol) of 11-phenylsulfonamidoundecanoic acid and 9.86 ml (0.1 mol) of n-butylamine with 8.03 ml (0.11 mol) of thionyl chloride in 120 ml of dry pyridine cooled with an ice water bath. The solvent was distilled, followed by the product recrystallization from ethylacetate.

### EXAMPLE4: Synthesis of N¹-butyl-11-dodecylsulfonamidoundecanamide C₁₂H₂₅C₆H₄SO₂NH (CH₂)₁₀CONHC₄H₉

### A:Dodecylbenzenesulfonamidoundecanoic acid C₁₂H₂₅C₆H₄SO₂NH (CH₂)₁₀COOH

40.2 g (0.2 mol) of 11-aminoundecanoic acid were dissolved in 350 ml of water solution containing 11.2 g (0.2 mol) of potassium hydroxide. 69 ml (0.2 mol) of dodecylbenzenesulfonylchloride and 80 ml of 10% aqueous sodium hydroxide were simultaneously added with stirring to the solution. After stirring for 4 hours the solution was acidified with hydrochloric acid. Brown oil formed was washed and isolated with the help of separating fuel. It was dried in vacuum (0.1 mbar) at 70-80°C.

Title compound was obtained in the same manner as the one in example 3 by the reaction between dodecylbenzenesulfonamidoundecanoic acid and butylamine in pyridine medium.

### EXAMPLE 5: Synthesis of dodecylbenzenesulfonamide (DBSA) C₁₂H₂₅C₆H₄SO₂NH₂:

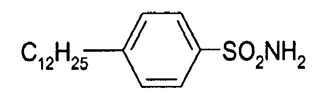

30 g of dodecylbenzenesulfonyl chloride obtained in example 2 was stirred with 50 ml of concentrated water ammonia for 2 hours at 50-60°C. The oil was washed with water, diluted hydrochloric acid and water respectively, and isolated in separating fuel. It was dried in vacuum (0.1 mbar) at 70-80°C.

### EXAMPLE 6: Synthesis of N-butyl-dodecylbenzenesulfonamide C₁₂H₂₅C₆H₄SO₂NHC₄H₉

30 g of dodecylbenzenesulfonyl chloride obtained in example 2 was stirred with 120 ml of water - butylamine mixture (2:1 vol.) for 2 hours when slightly heated. Excess of butylamine was distilled, oil product was washed with diluted mineral acid and water, and isolated in separating fuel. It was dried in vacuum (0.1 mbar) at 70-80°C.

### EXAMPLE 7: Synthesis of N-butyl-guanidine dodecylbenzenesulfonate

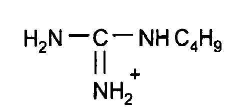

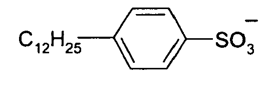

### A: Synthesis of N-butyl-guanidine chloride

20 g (0.21 mol) of guanidine chloride were mixed with 30 ml of n-butylamine and heated to slight boiling during 10 hours. Excess of butylamine was distilled at reduced pressure. Transparent glassy product was obtained when cooled.

### B: An obtaining of title compound:

20 g (0.132 mol) of N-butyl-guanidine chloride were dissolved in 100 ml of water. Solution of 46 g (0.132 mol) of sodium dodecylbenzenesulfonate was added when stirred. White solid was filtered, washed with water and dried in vacuum (0.1 mbar) at 70-80°C to obtain viscous liquid.

### EXAMPLE 8: Efficiency of a plasticizer according to the invention as compared to traditional BBSA in PA-11:

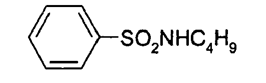

The DBSA plasticizer described in Example 5 was introduced in PA-11 (BMNO commercial grade from ARKEMA) in α-extruder DSM at 260°C in the same conditions as BBSA. The load of the plasticizer is 12% by weight.

Table I demonstrates mechanical properties after two weeks of conditioning at 23°C and 50% of relative humidity.

**Table I**

| **Composition** | **Flex. Modulus, MPa (ISO 178:93)** | **Tensile modulus, MPa (ISO 527-2:93 1BA)** | **Tensile strength at break, MPa, (ISO 527-2:93 1BA)** | **Tensile elongation at break, % (ISO 527-2:93 1BA)** |
|---|---|---|---|---|
| **PA-11** | 1150 | 1050 | 63 | 280 |
| **PA-11+12%BBSA** | 450 | 350 | 55 | 300 |
| **PA-11+12%DBSA** | 550 | 550 | 55 | 270 |

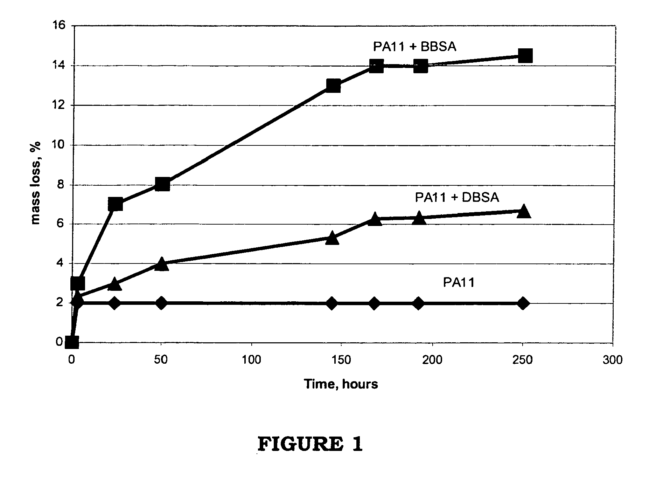

These data show that the plasticizing efficiency of DBSA is not far from traditional BBSA. In the same time the DBSA is clamed to be more resistant to exudation. Figure 1 gives the loss of weight of the mixtures at 120°C.

The loss of 2% is related to the residual humidity in the polyamide. All BBSA has disappeared after 150 hours at 120°C while there remains nearly 70% of DBSA.

## Claims

1. A process for making a plasticization of an aliphatic polyamide having the chain formation of the formula (I) :
-[F-R-F'-R']ₙ- (I)
wherein :
- F and F' each independently represent a functional group 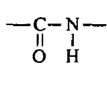 or 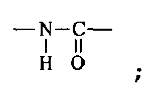
- R and R', identical or different, each independently represent a divalent aliphatic radical ; and
- n represents the number of -[F-R-F'-R']- units of said polyamide,
**characterised in that** at least one external plasticizer is added to said polyamide, said at least one external plasticizer being selected among compounds having the formula (II):
R¹-[F1-A]ₘ-F' 1-R² (II)
wherein :
- R¹ and R², identical or different, each represent a terminal group;
- m is an integer from 1;
- F1 and F'1 , identical or different, each represent a divalent functional group having two chain links, the F groups being identical or different when m is 2 or more ;
- A represents a divalent aliphatic, aromatic, aliphatic-aromatic or aromatic-aliphatic arm, the A arms being identical or different when m is 2 or more ;
the nature of the functional groups F1 and F'1 and the length of the arms (f) being selected so that the functions F and F' are under the plasticization conditions able to react respectively with two neighbouring functions 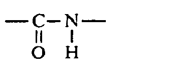 or 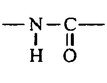 of the polyamide of formula (I) when m is 1 or with m + 1 neighbouring functions 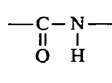 or 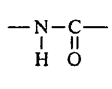 of the polyamide of formula (I) when m is different from 1.

2. A process according to Claim 1, **characterized by** the fact that the functions F1 and F'1 are selected among the functions 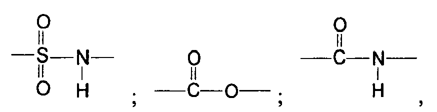 each of them being intended to react and/or interact with a 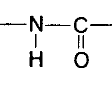 group of a polyamide.

3. A process according to anyone of Claims 1 or 2 in which m is 1 or 2.

4. A process according to anyone of Claims 1 to 3 in which the polyamide is a long chain polyamide.

5. A process according to anyone of Claims 1 to 4 in which the polyamide is selected among :
- PA-X, said polyamide being prepared from an aliphatic amino acid having notably from 6 to 18 carbon atoms, and preferably 6, 11 and 12 carbon atoms, X denoting the residues of said aliphatic amino acid ;
- PA-X,Y, said polyamide being prepared from an aliphatic diamine having notably from 6 to 20, advantageously 6 to 18, preferably 6 to 12, carbon atoms and an aliphatic dicarboxylic acid having notably from 4 to 24 carbon atoms, X denoting the residues of said aliphatic diamine and Y denoting the residues of said aliphatic dicarboxylic acid;
- PA-X,Y/Z, said polyamide being prepared from an aliphatic diamine having notably from 6 to 20, advantageously 6 to 18, preferably 6 to 12, carbon atoms, an aliphatic dicarboxylic acid having notably from 4 to 24, advantageously 6 to 18, preferably 6 to 18, preferably 6 to 14, carbon atoms,and a lactam having notably from 6 to 14 carbon atoms; X denoting the residues of said aliphatic diamine, Y denoting the residues of said aliphatic dicarboxylic acid and Z denoting the residues of said lactam.

6. A process according to claim 5 in which the polyamide is selected among PA-6, PA-11, PA-12, PA-6.6, PA-6.10 (hexamethylenediamine and sebacic acid units), PA-6.12 (hexamethylenediamine and dodecanedioic acid units), PA-6.14 (hexamethylenediamine and C14 diacid units), PA-6.18 (hexamethylenediamine and C18 diacid units), PA-10.10 (1,10-decane diamine and sebacic acid units) ; PA-6.6/6, PA-6.10/6, PA-6,10/12.

7. A process according to claim 6 in which the polyamide is selected among PA-6, PA-11, PA-12 and PA-6.6.

8. A process according to any one of Claim 1 to 7 in which the plasticizer is a p-alkylbenzenesulfonamide of formula (III):
R₃-C₆H₄SO₂NHR₄ (III)
with R₃ = C₁₂H₂₅, C₁₆H₃₃ ;
R₄= H,CH₃,C₁₆H₃₃.

9. A process according to Claim 8 in which the plasticizer is C₁₂H₂₅-C₆H₄-SO₂NH₂ or C₁₆H₃₃-C₆H₄-SO₂NH₂

10. A process according to any one of Claims 1 to 7 in which the plasticizer is a guanidine-based compound of formula (IV): 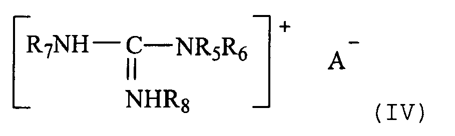 with
R₅ = H, C₄H₉
R₆ = C₄H₉
R₇ = H, C₉H₉, C₁₆H₃₃
R₈ = H, C₈H₁₇, C₁₆H₃₃
A⁻ = R₉SO₃⁻, R₁₀COO⁻
R₉ = C₈H₁₇, C₁₆H₃₃, R_{9'}C₆H₄
R_{9'} = H, CH₃, C₁₆H₃₃
R₁₀ = C₈H₁₇, C₁₆H₃₃, C₆H₅

11. A process according to Claim 10 in which the plasticizer is of formula : 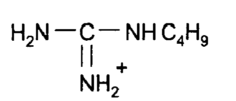 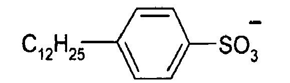 or of formula :

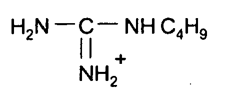

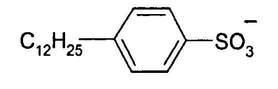

12. A process according to Claim 1 in which the plasticizer is of formula (V): 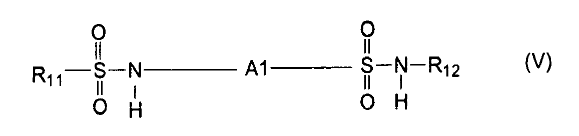 wherein :
- A1 =
- (CH₂)ₙ- , n being 5, 10, the polyamide to be plasticized being respectively PA-6, PA-11 and PA-12;
or
- (CH₂)ₚCONH-C₆H₄- ; -(CH₂)ₚNHCO-C₆H₄- ; -(CH₂)ₚCOO-C₆H₄- ;
- (CH₂)ₚCOOCH₂-C₆H₄- ; p being 1 when the polyamide to be plasticized is PA-6 and p being 5 when the polyamide to be plasticized is PA-11 or PA-12 ;
- R₁₁ = -Alk, -C₆H₅, -C₆H₄Alk,
- R₁₂ = -Alk ;
- Alk representing an alkyl radical having 1 to 16 carbon atoms.

13. A process according to Claim 11 in which the plasticizer is of formula :

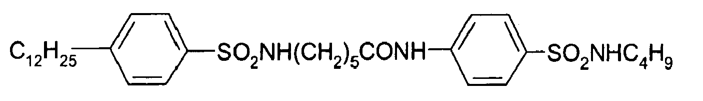

14. A process according to Claim 1 in which the plasticizer if of formula (VI): 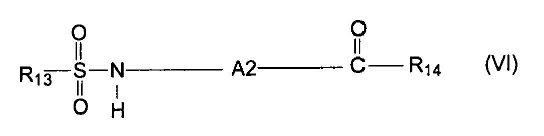 wherein:
- A2 = -(CH₂)_{q}- , q = 5, 10, the polyamide to be plasticized being respectively PA-6 or PA-11;
- R₁₃ = -Alk, -C₆H₅, -C₆H₄Alk,
- R₁₄ = -NHAlk or -OAlk ;
- Alk representing an alkyl radical having 1 to 16 carbon atoms.

15. A process according to Claim 14 in which the plasticizer is of formula:

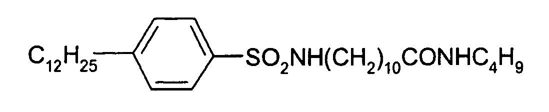

16. A process according to Claim 1 in which the plasticizer is of formula (VII) : 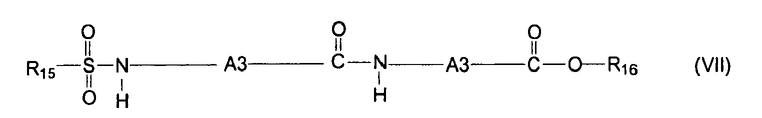 wherein :
- A3 = -(CH₂)ₙ-, n = 5, 10, the polyamide to be plasticized being respectively PA 6 or PA 11;
- R₁₅ = -Alk, -C₆H₅, -C₆H₄Alk ;
- R₁₆ = -Alk ;
- Alk representing an alkyl radical having 1 to 16 carbon atoms.

17. A process according to Claim 16 in which the plasticizer is of formula :
